# DEMANDE DE BREVET EUROPEEN

(11) **EP 0 609 134 A1**
(43) Date de publication de la demande: **03.08.1994**
(21) Numéro de dépôt: 94400152.8
(22) Date de dépôt: 25.01.1994
(51) Int. Cl.: H04N 1/032

(54) **Dispositif de lecture/écriture et procédé d'impression**

(30) Priorité: 26.01.1993 FR 9300718
(71) Demandeur: MATRA COMMUNICATION, F-29000 Quimper (FR)
(72) Inventeur: Henaff, Pierre, F-29000 Quimper (FR); Lemoine, Maurice, F-29730 Treffiagat (FR)
(74) Mandataire: Fruchard, Guy

(57) **Abrégé**

Le dispositif comporte des moyens d'entraînement de supports en feuille et des organes de lecture et d'écriture adjacents à des passages des supports en feuille, les organes de lecture et d'écriture étant disposés adjacents l'un à l'autre et les passages des supports en feuille comprenant au moins un tronçon commun en regard des organes de lecture et d'écriture.

## Description

La présente invention concerne un dispositif de lecture/écriture et un procédé d'impression, notamment, bien que non exclusivement, pour une utilisation dans un télécopieur.

On connaît des dispositifs de lecture/écriture, notamment pour des télécopieurs, qui comportent une tête d'écriture et un organe de lecture séparés afin de mettre en oeuvre séparément ces deux fonctions. Il est en effet habituel d'utiliser soit la fonction de lecture, par exemple pour l'émission d'un message dans le cas d'un télécopieur ou pour la mise en mémoire d'une image dans le cas d'un ordinateur, soit la fonction d'écriture, par exemple pour la réception d'un message dans le cas d'un télécopieur ou pour l'édition d'un texte mis en mémoire dans un ordinateur.

La réalisation séparée de ces fonctions est coûteuse non seulement en raison du fait qu'elle implique généralement la réalisation de deux équipements mécaniquement séparés, mais également en raison du fait que les deux équipements séparés ont des modes de fonctionnement différents qui impliquent des électroniques de commandes également séparées.

A titre d'exemple, on connaît des dispositifs d'écriture comportant un organe d'écriture porté par un chariot monté pour se déplacer selon une première direction et des moyens pour assurer un déplacement relatif de l'organe d'écriture et d'un document à imprimer selon une seconde direction généralement perpendiculaire à la première direction. La mise en oeuvre d'un dispositif de ce type suppose non seulement une électronique de commande de l'organe d'écriture, que celui-ci soit matriciel, thermique ou à jet d'encre, mais également une électronique de commande des mouvements du chariot.

Parallèlement, l'organe de lecture a généralement une structure notablement différente et est constitué par exemple d'une rangée fixe de capteurs d'images disposés de façon adjacente au document pour lire directement une ou plusieurs rangées de points élémentaires formant les caractères du document en cours de lecture, ou un capteur disposé à distance du document et associé à un concentrateur. Dans un cas comme dans l'autre, on conçoit que l'électronique de commande de l'organe de lecture est sensiblement différente de celle de l'organe d'écriture.

On connaît également du document WO-A- 82/01163 une tête d'impression comportant un organe d'écriture associé à un détecteur optique pour contrôler la qualité de l'impression réalisée par l'organe d'écriture et interrompre l'impression en cas de défaillance de celui-ci. Ce document ne prévoit aucune fonction supplémentaire pour le détecteur optique . Le dispositif décrit n'est donc prévu que pour avoir une fonction d'écriture.

Selon l'invention on propose un dispositif de lecture/écriture comportant des moyens d'entraînement de supports en feuille et des organes de lecture et d'écriture adjacents à des passages des supports en feuille, caractérisé en ce que les organes de lecture et d'écriture sont disposés adjacents l'un à l'autre et en ce que les passages des supports en feuille comprennent au moins un tronçon commun en regard des organes de lecture et d'écriture.

Ainsi, on réduit non seulement le nombre d'équipements physiquement séparés à l'intérieur de la machine, ce qui réduit tout à la fois le coût de la machine et son encombrement mais l'association de l'organe d'écriture et de l'organe de lecture sur un même chariot permet en outre de simplifier l'électronique de commande du dispositif de lecture/écriture.

Ainsi, la tête de lecture/écriture peut être mise en oeuvre non seulement pour réaliser séparément les fonctions de lecture ou d'écriture, mais peut en outre servir à effectuer un contrôle de la lecture et/ou de l'écriture.

A cet effet, on prévoit également selon l'invention un procédé d'impression au moyen d'un organe d'écriture associé à un organe de lecture, ce procédé comportant les étapes de réaliser une impression par commande de la tête d'écriture en fonction d'une consigne d'écriture, de détecter l'impression réalisée, et d'effectuer une comparaison entre l'impression réalisée et la consigne d'écriture, caractérisé en ce qu'il comporte en outre l'étape d'adapter la commande de la tête d'écriture en fonction d'une différence entre la consigne d'écriture et l'impression lue.

Ainsi lorsque l'impression réalisée ne correspond pas à la consigne d'écriture, soit parce que la tête d'écriture est endommagée, soit parce que l'un des composants nécessaires au fonctionnement de la tête d'écriture est défaillant, il est possible de corriger la défaillance en modifiant la commande de la tête d'écriture, voire même d'effectuer un nouveau passage de la tête d'écriture pour ajouter des points manquants ou rectifier ceux qui sont mal imprimés.

D'autres caractéristiques et avantages de l'invention apparaîtront à la lecture de la description qui suit d'un mode de réalisation particulier non limitatif de l'invention en relation avec les figures ci-jointes parmi lesquelles :
- la figure 1 est une vue en perspective partielle schématique d'un dispositif de lecture/écriture selon l'invention,
- la figure 2 est une représentation schématique agrandie d'une face de la tête de lecture/écriture qui est tournée vers le document à lire/imprimer,
- la figure 3 est un diagramme schématique illustrant le procédé selon l'invention.

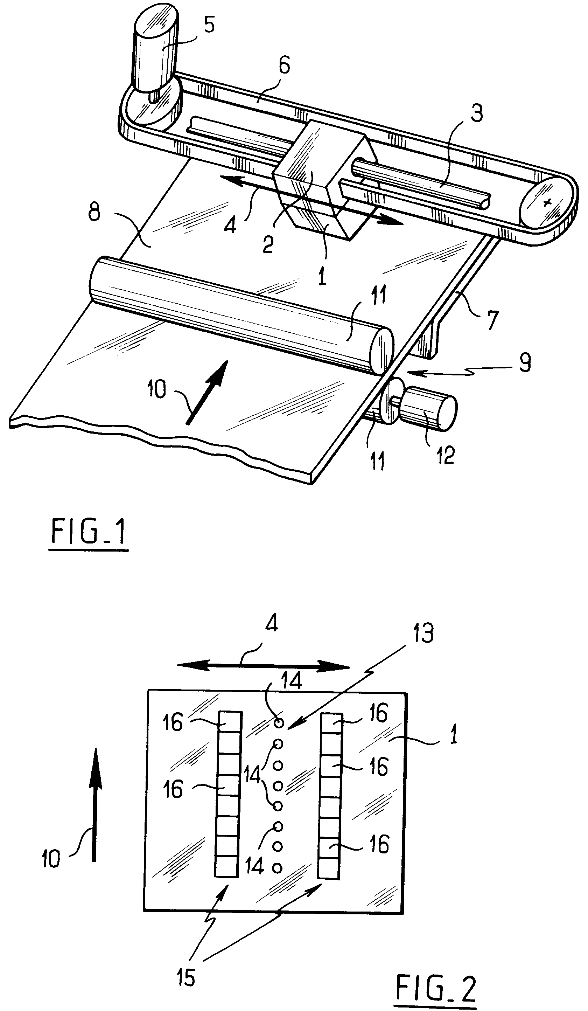

En référence aux figures 1 et 2, le dispositif de lecture/écriture selon l'invention comporte une tête de lecture/écriture 1 portée, d'une façon connue en soi pour des têtes d'écriture, par un chariot 2 monté pour se déplacer sur un guide 3 selon une première direction 4 symbolisée par une double flèche épaisse sur la figure 1. Les mouvements du chariot 2 sont assurés par un moteur électrique 5 relié au chariot 2 par un organe d'entraînement tel qu'une courroie 6. En regard de la tête de lecture/écriture 1, le dispositif comporte une plaque de guidage 7 pour un support en feuille 8, tel qu'une feuille de papier ou un ruban de papier, et des moyens d'entraînement généralement désignés en 9 pour assurer un déplacement relatif de la tête de lecture/écriture et du support en feuille selon une seconde direction 10 différente de la première direction et symbolisée par une flèche en trait épais sur la figure 1. Pour des raisons évidentes de simplicité de commande des mouvements, la première direction 4 et la seconde direction 10 sont de préférence perpendiculaires l'une à l'autre.

Dans le mode de réalisation illustré, les moyens d'entraînement 9 sont formés par des rouleaux 11 entre lesquels la feuille 8 est pincée, l'un des rouleaux étant entraîné en rotation par un moteur 12. Il s'agit là d'une simple illustration des moyens d'entraînement, ceux-ci pouvant avoir toute structure appropriée à la nature du document à déplacer.

La figure 2 illustre de façon schématique un mode de réalisation de la face de la tête de lecture/écriture dans le cas où l'écriture est réalisée par jet d'encre. Dans ce mode de réalisation, l'organe d'écriture, généralement désigné en 13, de la tête de lecture/écriture comporte une série de buses 14 convenablement reliées à des organes de commandes de jets d'encre non représentés et disposées selon la seconde direction 10 pour réaliser simultanément une série de lignes de points élémentaires lors du déplacement de la tête de lecture/écriture 1 selon la première direction 4. Selon le mode de réalisation illustré, la tête de lecture/écriture comporte également un organe de lecture, généralement désigné en 15, comprenant deux séries de capteurs d'images 16 montés de part et d'autre des buses 14, les capteurs 16 d'une série étant disposés selon la seconde direction 10 et un capteur de chaque série étant disposé par rapport à une buse 14 selon la première direction 4 de sorte que la trajectoire des capteurs 16 par rapport à la feuille 8 est la même que la trajectoire des buses d'impression 14 lors des déplacements du chariot 2.

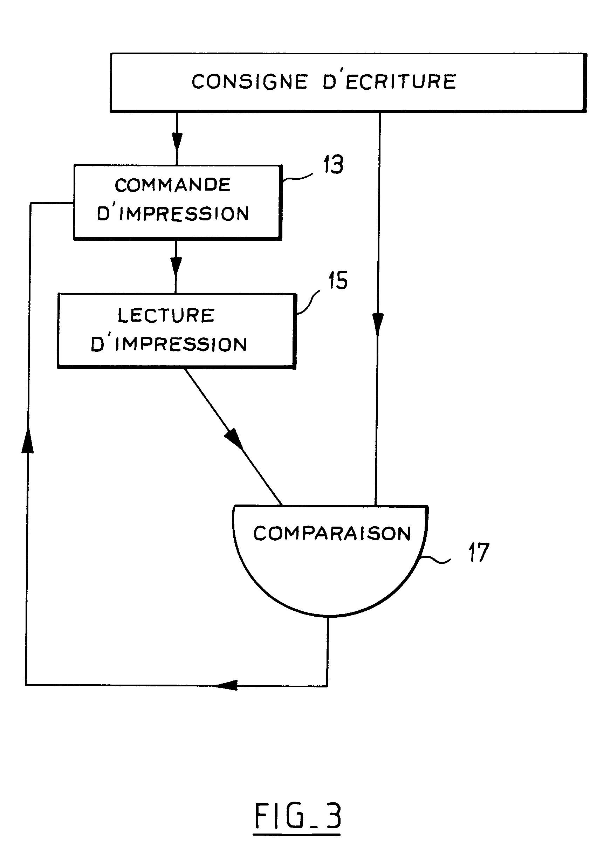

De préférence, le dispositif de lecture/écriture comporte en outre un organe d'analyse 17 (figure 3) qui est implanté dans un microprocesseur qui peut être soit intégré à la tête de lecture/écriture 1, soit porté par le châssis de la machine et convenablement relié à la tête de lecture/écriture.

Dans sa fonction d'impression, le dispositif selon l'invention est de préférence mis en oeuvre selon le procédé partiellement illustré par la figure 3 et comportant les étapes de détecter la présence d'une feuille au moyen de l'organe de lecture puis de réaliser une impression par commande de l'organe d'écriture. On notera à ce propos que le dispositif selon l'invention permet de supprimer le capteur de présence de papier qui est habituellement disposé sur le chemin du papier en amont de la tête d'écriture. L'ensemble de la machine se trouve donc encore simplifié. En outre la détection du bord du papier par l'organe de lecture est très précise et permet donc de déterminer une marge supérieure d'une grande précision contrairement aux dispositifs d'impression habituels pour lesquels la marge supérieure est variable en fonction de la façon dont une feuille est saisie par les moyens de préhension.

De la même façon l'organe de lecture permet de détecter les bords latéraux de la feuille et les détecteurs de fin de course peuvent alors être supprimés. Cette disposition permet également de réaliser sans difficultés une impression sur des feuilles de formats différents quelle que soit la position de la feuille dans le passage.

L'impression par l'organe d'écriture 13 est effectuée en fonction d'une consigne d'écriture selon des paramètres de départ mémorisés dans le dispositif et, selon l'invention, on effectue en outre une lecture de l'impression réalisée, une comparaison entre l'impression réalisée et la consigne d'écriture au moyen de l'organe d'analyse 17, et une adaptation de la commande de l'organe d'écriture en fonction de la différence entre la consigne d'écriture et l'impression lue. La commande de l'organe d'écriture peut varier en fonction du type d'organe d'écriture utilisé. Elle sera généralement une forme d'onde qui peut être modifiée en fonction des paramètres d'écriture retenus comme résultat de la comparaison.

La consigne d'écriture est générée d'une façon connue en soi à partir d'un signal d'impression tel qu'un signal reçu d'une ligne téléphonique dans le cas d'un télécopieur ou un signal transmis par un câble de liaison dans le cas d'un ordinateur. Compte tenu du décalage existant entre l'impression et la lecture en raison de la distance séparant l'organe de lecture de l'organe d'écriture, l'organe d'analyse 17 comporte une mémoire de façon à effectuer à chaque instant une comparaison du signal de lecture avec la consigne d'écriture correspondante.

Dans le mode de réalisation illustré qui comporte deux séries de capteurs d'images 16 disposées de part et d'autre de la série d'éléments d'écriture 14, la tête de lecture / écriture peut être utilisée dans les deux sens de déplacement du chariot. Dans chaque sens de déplacement du chariot on utilise alors seulement la série de capteurs d'images 16 qui est disposée en amont de la série d'éléments d'écriture 14 par référence à un sens de déplacement du chariot pour détecter le bord de la feuille et la série de capteurs d'images disposée en aval de la série d'éléments d'écriture pour effectuer un contrôle d'impression. Dans un mode de réalisation plus simple de l'invention on pourrait prévoir une seule série de capteurs d'images 16. Le contrôle de l'impression pourrait alors être effectué seulement dans le sens de déplacement du chariot pour lequel le capteur d'images est en aval de l'élément d'écriture.

Dans le mode de réalisation illustré les capteurs d'images 16 sont du type CIS (de l'anglais Contact Image Sensor) qui donne un signal analogique. Dans ce cas il est possible de détecter non seulement une absence d'impression là où un point aurait dû être imprimé compte tenu de la consigne d'impression, mais également un point mal formé. Cette dernière anomalie peut généralement survenir soit en fin de cartouche ou lorsqu'une buse d'éjection est encrassée pour un organe d'écriture à jet d'encre, soit lorsque le ruban est proche de la fin d'usage pour un organe d'écriture à transfert thermique. Lorsque l'anomalie est en-dessous d'un seuil fixé mis en mémoire dans l'organe d'analyse 17, on peut prévoir de corriger la commande d'écriture en modifiant la forme d'onde de commande.

Pour la fonction de lecture d'un document, l'organe d'écriture sera inactif et l'on utilisera en principe une seule série de capteurs d'images. Dans le mode de réalisation illustré qui comporte deux séries de capteurs d'images on peut toutefois réaliser un contrôle de lecture en comparant les signaux de lecture générés par les deux séries de capteurs, ce qui permet le cas échéant de détecter la défaillance d'un capteur d'images et corriger de façon correspondante le signal de lecture transmis.

Lorsque le dispositif de l'invention est monté dans un télécopieur l'organe d'écriture peut être utilisé pour marquer chaque page du document pour signaler que cette page a été transmise sans interruption de la communication.

Bien entendu l'invention n'est pas limitée aux modes de réalisation décrits et on peut y apporter des variantes de réalisation sans sortir du cadre de l'invention tel que défini par les revendications.

En particulier, bien que l'invention ait été décrite avec des éléments d'écriture et des capteurs d'images disposés selon des séries comportant une seule rangée, on peut prévoir de les disposer selon des matrices.

En outre, bien que dans le mode de réalisation illustré le passage de la feuille soit commun sur toute sa longueur aux modes de lecture ou d'écriture, on peut, pour des raisons de commodité de stockage des documents, prévoir seulement un tronçon de passage commun aux deux modes en regard des organes de lecture et d'écriture, et prévoir des tronçons de passage séparés en amont et/ou en aval de ce tronçon commun.

Le dispositif selon l'invention peut être utilisé pour faire de la copie en mémorisant l'information lors d'un mode de lecture puis en la restituant en mode d'écriture, ou pour faire de la lecture/écriture recto/verso en prévoyant un retournement de feuille.

La fonction de détection de bord de feuille de l'organe de lecture peut être mise en oeuvre indépendamment de la fonction de contrôle d'impression.

## Revendications

1. Dispositif de lecture/écriture comportant des moyens d'entraînement de supports en feuille et des organes de lecture et d'écriture adjacents à des passages des supports en feuille, caractérisé en ce que les organes de lecture et d'écriture sont disposés adjacents l'un à l'autre et en ce que les passages des supports en feuille comprennent au moins un tronçon commun en regard des organes de lecture et d'écriture.

2. Dispositif de lecture/écriture selon la revendication 1 comportant un organe d'écriture (13) porté par un chariot (2) monté pour se déplacer selon une première direction (4), et des moyens (9) pour assurer un déplacement relatif de l'organe d'écriture (1) et du support en feuille (8) selon une seconde direction (10) différente de la première direction, caractérisé en ce que l'organe de lecture (15) est porté par le chariot et comprend au moins un capteur d'images (16) monté sur le chariot à côté de l'organe d'écriture selon la première direction (4) par rapport à l'organe d'écriture.

3. Dispositif de lecture/écriture selon la revendication 2, caractérisé en ce que l'organe de lecture (15) comporte au moins un capteur d'images (14) disposé en aval de l'organe d'écriture (13) par référence à un sens de déplacement du chariot.

4. Dispositif de lecture/écriture selon la revendication 1, caractérisé en ce que l'organe de lecture comporte au moins deux capteurs d'images (14) montés de part et d'autre de l'organe d'écriture.

5. Dispositif de lecture/écriture selon la revendication 3 ou la revendication 4, caractérisé en ce que l'organe de lecture et l'organe d'écriture comportent des séries d'éléments disposés selon la seconde direction (10).

6. Dispositif de lecture/écriture selon l'une des revendications 1 à 5, caractérisé en ce que l'organe de lecture est relié à un organe d'analyse (17) associé à l'organe d'écriture (13).

7. Procédé d'impression au moyen d'un organe d'écriture associé à un organe de lecture, comportant les étapes de réaliser une impression par commande de l'organe d'écriture en fonction d'une consigne d'écriture, d'effectuer une lecture de l'impression réalisée, et d'effectuer une comparaison entre l'impression réalisée et la consigne d'écriture, caractérisé en ce qu'il comporte en outre l'étape d'adapter la commande de l'organe d'écriture en fonction d'une différence entre la consigne d'écriture et l'impression lue.

8. Procédé d'impression au moyen d'un organe d'écriture associé à un organe de lecture, caractérisé en ce qu'il comporte les étapes de détecter la présence d'un support en feuille au moyen de l'organe de lecture puis d'effectuer l'impression.
